# EUROPÄISCHE PATENTANMELDUNG

(11) **EP 0 971 005 A1**
(43) Veröffentlichungstag der Anmeldung: **12.01.2000**
(21) Anmeldenummer: 99112621.0
(22) Anmeldetag: 02.07.1999
(51) Int. Cl.: C09D 5/00, C09D 5/24

(54) **Temporärer Schutz von Kunststoffgegenständen gegen elektrostatische Aufladung**

(30) Priorität: 06.07.1998 DE 19830176
(71) Anmelder: KARL WÖRWAG LACK- UND FARBENFABRIK GMBH & CO. KG, 70435 Stuttgart (DE)
(72) Erfinder: Baumgärtel, Ramona, 70567 Stuttgart (DE); Ortmeier, Jürgen, 73230 Kirchheim (DE); Maier, Walter, Dr., 70567 Stuttgart (DE)
(74) Vertreter: Patentanwälte Ruff, Beier, Schöndorf und Mütschele

(57) **Zusammenfassung**

Bei einem Verfahren zum temporären Schutz von Kunststoffgegenständen, insbesondere von Kunststoffformteilen, gegen elektrostatische Aufladung und eine damit einhergehende Verschmutzung, wird der Kunststoffgegenstand mindestens teilweise mit einer Beschichtung versehen, die ein Antistatikum enthält und mit Wasser und/oder mindestens einem organischen Lösungsmittel abwaschbar ist. Bei dem Antistatikum handelt es sich insbesondere um ein elektrisch leitfähiges, organisches Polymer. Die Beschichtung wird insbesondere in Form einer Lösung auf den Kunststoffgegenstand aufgebracht. Weiter umfaßt die Erfindung eine Zusammensetzung, insbesondere eine Lösung, die mindestens ein Antistatikum und mindestens ein Lösungsmittel enthält. Bei dem Antistatikum handelt es sich insbesondere um ein elektrisch leitfähiges, organisches Polymer, während als Lösungsmittel insbesondere eine Mischung von Wasser und organischen Lösungsmitteln vorgesehen ist.

## Beschreibung

Die Erfindung betrifft ein Verfahren zum temporären Schutz von Kunststoffgegenständen gegen elektrostatische Aufladung und eine damit einhergehende Verschmutzung sowie eine Zusammensetzung, die in einem derartigen Verfahren einsetzbar ist.

Bekanntlich haben Kunststoffe die nachteilige Eigenschaft, Staub- und Schmutzteilchen durch elektrostatische Aufladung anzuziehen und festzuhalten. Die daraus resultierende Verschmutzung der Kunststoffoberflächen läßt sich häufig auch durch gründliche Reinigung nicht mehr vollständig beseitigen. Dies gilt insbesondere dann, wenn beispielsweise in einem Waschprozeß Reinigungsmittel auf wässriger Basis eingesetzt werden.

Die auf der Kunststoffoberfläche verbleibenden Verunreinigungen können insbesondere dann nicht in Kauf genommen werden, wenn der betreffende Kunststoffgegenstand anschließend lackiert werden soll. Vor allem in Fällen, in denen der Kunststoffgegenstand vor dem Lackieren, vielleicht sogar über einen längeren Zeitraum, gelagert wird, kann die erhaltene Lackschicht eine mangelhafte Qualität aufweisen. Diese mangelhafte Qualität kann sich zum einen im optischen Erscheinungsbild bemerkbar machen, da die Restverschmutzungen je nach Lackaufbau, Lackierprinzip oder Geometrie des Kunststoffgegenstandes am lackierten Gegenstand sichtbar werden und bleiben. Zum anderen kann sich die mangelhafte Qualität auch darin äußern, daß die Lackschicht nicht oder zumindest nicht dauerhaft auf dem Kunststoffgegenstand haftet.

Die beschriebene Problematik stellt sich beispielsweise bei der Lackierung von Kraftfahrzeugbauteilen aus Kunststoff, die sich bei ihrer Handhabung schnell elektrostatisch aufladen und dementsprechend dauerhaft Staub- und Schmutzteilchen auf ihren Oberflächen anlagern. Insbesondere nach längeren Lagerzeiten der Kunststoffbauteile vor ihrer Lackierung lassen sich derartige Verschmutzungen nicht mehr vollständig entfernen. Bei der Lackierung im industriellen Maßstab, insbesondere im Serienbetrieb, findet zwar regelmäßig eine Vorbehandlung in Waschanlagen, beispielsweise sog. power-wash-Anlagen statt. Diese können jedoch die beschriebenen Verschmutzungen nicht zufriedenstellend entfernen.

Die Erfindung stellt sich die Aufgabe, die durch eine elektrostatische Aufladung und die daraus resultierende Verschmutzung verursachten Probleme bei der Lackierung von Kunststoffgegenständen zu beseitigen oder zumindest deutlich zu verringern. Insbesondere soll ein geeignetes Verfahren zum Schutz der Kunststoffgegenstände gegen elektrostatische Aufladung und die daraus resultierende Verschmutzung zur Verfügung gestellt werden. Außerdem ist es das Ziel der Erfindung, die dazu erforderlichen Mittel bereitzustellen.

Die genannten und weitere Aufgaben der Erfindung werden durch das Verfahren mit den Merkmalen des Anspruchs 1 gelöst. Bevorzugte Ausführungen dieses Verfahrens sind in den abhängigen Ansprüchen 2 bis 9 dargestellt. Weiter umfaßt die Erfindung eine Zusammensetzung mit den Merkmalen des Anspruchs 10, deren besondere Ausführungen in den abhängigen Ansprüchen 11 bis 17 definiert sind. Schließlich umfaßt die Erfindung die aus Anspruch 18 und dem davon abhängigen Anspruch 19 hervorgehende Verwendung. Der Wortlaut sämtlicher Ansprüche wird hiermit durch Bezugnahme zum Inhalt dieser Beschreibung gemacht.

Bei dem erfindungsgemäßen Verfahren zum temporären Schutz von Kunststoffgegenständen gegen elektrostatische Aufladung und eine damit einhergehende Verschmutzung wird auf mindestens einen Teil der Oberfläche des Kunststoffgegenstandes eine Beschichtung aufgebracht. Diese enthält mindestens ein Antistatikum und ist mit Wasser und/oder mindestens einem organischen Lösungsmittel abwaschbar. Durch dieses Verfahren wird eine elektrisch leitfähige Schutzschicht auf die Kunststoffoberfläche aufgebracht, die die aus der elektrostatischen Aufladung resultierende Ladung ableitet und damit eine durch die Anlagerung von Staub- und Schmutzteilchen hervorgerufene Verschmutzung verhindert oder zumindest deutlich reduziert. Im Gegensatz zu bisherigen elektrostatischen Beschichtungen ist bei der Erfindung vorgesehen, daß die Beschichtung mit Wasser und/oder organischem Lösungsmittel abwaschbar ist, um eine weitere Bearbeitung, Veredelung oder dergleichen des Kunststoffgegenstandes bzw. seiner Oberfläche zu ermöglichen. Eine dauernde, d.h. dauernd wasser- und/oder lösungsmittelresistente Haftung der Beschichtung wird somit bei der Erfindung nicht angestrebt.

Die Methode zum Aufbringen der elektrisch leitfähigen Beschichtung ist bei der Erfindung nicht kritisch. Sie kann grundsätzlich mit allen üblichen Beschichtungsmethoden, wie beispielsweise Aufstreichen, Aufsprühen, Aufwalzen, Spincoaten und dergleichen erfolgen.

Nach dem erfindungsgemäßen Verfahren können die verschiedensten Kunststoffgegenstände aus unterschiedlichsten Kunststoffmaterialien beschichtet werden. So kann es sich beispielsweise um Haushalts- oder Elektronikgeräte, z.B. Computergehäuse oder dergleichen, handeln. Vorzugsweise handelt es sich bei den Kunststoffgegenständen um Bauteile von Kraftfahrzeugen, insbesondere Stoßfänger, Außenspiegel, Türgriffe, Innenverkleidungselemente und so weiter. Die genannten und weitere Kunststoffgegenstände werden häufig weiterverarbeitet oder veredelt, wobei insbesondere mindestens ein Lackiervorgang, der Dekor- oder Schutzzwecken dienen kann, vorgesehen ist. Bekanntlich werden beispielsweise Stoßfänger, Außenspiegel und andere Kraftfahrzeugbauteile lackiert, vorzugsweise entsprechend der jeweiligen Außenfarbe des Kraftfahrzeuges. Bei Anwendung des erfindungsgemäßen Verfahrens treten hierbei die beschriebenen Vorteile ein, unabhängig davon, ob bei der Lackierung ein Flüssiglack auf Basis organischer Lösungsmittel, ein Flüssiglack auf Wasserbasis oder ein Pulverlack zum Einsatz kommt.

Wie bereits erwähnt, kann das erfindungsgemäße Verfahren bei einer Vielzahl üblicher Kunststoffmaterialien eingesetzt werden. Gegebenenfalls können vor Aufbringen der temporären Antistatikbeschichtung Vorbehandlungsschritte durchgeführt werden, wie sie bei der Beschichtung der einzelnen Kunststoffmaterialien üblich sind, z.B. Reinigungsschritte oder eine sogenannte Coronabehandlung. Insbesondere ist das erfindungsgemäße Verfahren bei den Kunststoffmaterialien einsetzbar, wie sie im Kraftfahrzeugbau verwendet werden. Lediglich als Beispiele seien hier Polypropylen PP, Polyethylen PE, Polycarbonat PC und Ethylen-Propylen-Dien-Terpolymer EPDM genannt.

Bei dem erfindungsgemäßen Verfahren kann das Aufbringen der Beschichtung vorzugsweise unmittelbar oder kurz nach der Herstellung des Kunststoffgegenstandes erfolgen. In diesem Fall ist der Kunststoffgegenstand bereits beim Transport vom Herstellungsort oder Herstellungsbetrieb zum Weiterbearbeitungsort bzw. -betrieb gegen Verschmutzung geschützt. Das Entfernen, d.h. Ablösen oder Abwaschen der Beschichtung erfolgt dann vorzugsweise unmittelbar oder kurz vor der Weiterverarbeitung, insbesondere unmittelbar vor dem Lackiervorgang. In allen Fällen, insbesondere aber in den Fällen, in denen der Kunststoffgegenstand lackiert wird, erfolgt das Abwaschen/Ablösen der Beschichtung vorzugsweise mit Hilfe von Reinigungsmitteln auf Wasserbasis. Damit können zum einen Umweltgesichtspunkte berücksichtigt, zum anderen bereits vorhandene Waschanlagen benutzt werden, wie sie beispielsweise im Serienbetrieb bei der Lackierung von Kraftfahrzeugbauteilen aus Kunststoff vorhanden sind.

Im Prinzip können bei dem erfindungsgemäßen Verfahren alle bekannten Antistatika eingesetzt werden, sofern die resultierende Beschichtung mit Wasser und/oder organischen Lösungsmitteln abwaschbar ist. Insbesondere handelt es sich bei dem Antistatikum um ein elektrisch leitfähiges, organisches Polymer. Hier sind vor allem die elektrisch leitfähigen Polyheterocyclen zu nennen, wobei neben den Polypyrrolen und dem Polyanilinen vorzugsweise die sog. Polythiophene eingesetzt werden können. Es kann sich auch um Polymere handeln, die neben dem elektrisch leitfähigen Polymer, insbesondere den Polyheterocyclen, weitere (leitfähige oder nicht leitfähige) Polymere enthalten. Ein bevorzugtes elektrisch leitfähiges Polymer geht aus den Beispielen hervor.

Bei bevorzugten Ausführungen des erfindungsgemäßen Verfahrens wird die Beschichtung auf den Kunststoffgegenstand in Form einer Lösung aufgebracht. Diese Lösung enthält das Antistatikum, d.h. insbesondere das Polymer, und mindestens ein Lösungsmittel. Wie bereits ausgeführt, ist das Verfahren wie die Lösung auf die Kunststoffoberfläche aufgebracht wird, nicht kritisch. Die Antistatikbeschichtung bildet sich durch Abdampfen bzw. Abdunsten des Lösungsmittels von selbst aus. Dieser Trocknungsvorgang kann bei Umgebungstemperatur erfolgen, insbesondere auch unter Anwendung höherer Temperaturen, wobei die Eigenschaften der erhaltenen Beschichtung verbessert und auch die Trocknungszeiten reduziert werden können.

Bei dem Lösungsmittel kann es sich um Wasser, um organische Lösungsmittel oder um Mischungen aus Wasser und organischen Lösungsmitteln handeln. Bei den organischen Lösungsmitteln handelt es sich insbesondere um polare organische Lösungsmittel, die dementsprechend mit Wasser mindestens teilweise mischbar sind. Dabei sind insbesondere die aliphatischen Alkohole, wie Ethanol und Isopropanol, Aceton und N-Methyl-Pyrrolidon zu nennen.

Bei weiter bevorzugten Ausführungsformen des erfindungsgemäßen Verfahrens wird als Lösungsmittel ein Gemisch aus Wasser und mindestens einem organischen Lösungsmittel eingesetzt. Dies sind beispielsweise Mischungen aus Isopropanol und Wasser oder Mischungen aus Isopropanol, Wasser und N-Methyl-Pyrrolidon.

Das Gewichtsverhältnis von Wasser zu organischem Lösungsmittel kann vorzugsweise 50:1 bis 1:50 betragen, wobei innerhalb dieses Bereiches Bereiche von 50:1 bis 1:1, insbesondere 20:1 bis 5:1, weiter bevorzugt sind.

Ist in der eingesetzten Lösung organisches Lösungsmittel vorhanden, so beträgt der Gesamtanteil an organischem Lösungsmittel vorzugsweise mindestens 2 Gew.-%, insbesondere mindestens 4 Gew.-%, bezogen auf das Gesamtgewicht der Lösung. Dabei wird angestrebt, den Anteil an organischem Lösungsmittel in der Lösung aus den bekannten Gründen möglichst gering zu halten und dementsprechend den Anteil von Wasser in der Lösung möglichst hoch zu wählen.

Die Menge an Antistatikum in der Lösung muß ausreichend hoch sein, damit die auf dem Kunststoffgegenstand aufgebrachte Beschichtung die elektrostatische Elektrizität zuverlässig ableitet. Insbesondere bei der Verwendung elektrisch leitfähiger, organischer Polymere, wie Polythiophenen oder Polythiophen-haltigen Polymeren, sind dabei vergleichsweise geringe Mengen ausreichend. Solche geringen Mengen werden auch aus Kostengründen angestrebt. Bei üblichen Anwendungen werden Werte für den Oberflächenwiderstand von weniger als 10¹⁰ Ohm/Flächenelement, insbesondere weniger als 10⁶ Ohm/-Flächenelement erhalten. So enthält die zur Beschichtung eingesetzte Lösung das Antistatikum vorzugsweise in einer Menge von weniger als 5 Gew.-%, insbesondere weniger als 1 Gew.-%, bezogen auf das Gesamtgewicht der Lösung. Weiter bevorzugt ist es, wenn das Antistatikum in einer Menge von weniger als 0,5 Gew.-%, insbesondere in einer Menge zwischen 0,01 und 0,1 Gew.-%, enthalten ist.

In Weiterbildung kann bei dem erfindungsgemäßen Verfahren eine Lösung zur Beschichtung eingesetzt werden, in der zusätzlich mindestens ein Additiv enthalten ist. Bei diesen Additiven kann es sich vorzugsweise um sog. Verdickungsmittel oder um Untergrundnetzmittel handeln. Diese können dazu dienen, die Verarbeitbarkeit der Lösung und die Haftung der erhaltenen Beschichtung zu verbessern. Grundsätzlich können hier alle aus der Lacktechnik bekannten Verdickungsmittel und Untergrundnetzmittel eingesetzt werden. Als ein weiteres Additiv kommen beispielsweise Zusätze in Betracht, die eine Schaumbildung verhindern oder reduzieren, wenn die Beschichtung vor der Weiterbearbeitung des Kunststofffgegenstandes abgewaschen wird. Eine derartige Schaumbildung ist insbesondere in Waschanlagen unerwünscht, wie sie im industriellen Betrieb, beispielsweise bei der Lackierung von Kunststoffgegenständen, eingesetzt werden. Die Gesamtmenge an Additiven in der Lösung beträgt vorzugsweise weniger als 5 Gew.-%, insbesondere weniger als 1 Gew.-%, bezogen auf das Gesamtgewicht der Lösung.

Grundsätzlich ist es erwünscht, den Anteil an Additiven und allgemein an Feststoffen möglichst gering zu halten, um den Waschvorgang bzw. die entsprechenden Waschanlagen nicht mit Feststoffen zu belasten. Deshalb finden bei der Erfindung vorzugsweise keine (organischen) Bindemittel Verwendung.

Besonders hervorzuheben sind Ausführungsformen des erfindungsgemäßen Verfahrens, bei denen zur Herstellung der Antistatikbeschichtung eine Lösung verwendet wird, die die folgenden Bestandteile enthält:
- mindestens ein Antistatikum in einer (Gesamt)Menge zwischen 0,01 und 1 Gew.-%, vorzugsweise in einer Menge zwischen 0,01 und 0,1 Gew.-%,
- Wasser in einer Menge von mindestens 50 Gew.-%, vorzugsweise in einer Menge zwischen 60 und 90 Gew.-%,
- mindestens ein Additiv in einer (Gesamt)Menge zwischen 0 und 5 Gew.-%, vorzugsweise in einer Menge zwischen 1 und 3 Gew.-%, und
- mindestens einem organischen Lösungsmittel als Rest,
wobei die Gewichtsprozent-Angaben jeweils auf das Gesamtgewicht der Lösung bezogen sind.

Zusätzlich zu dem beschriebenen Verfahren umfaßt die Erfindung eine Zusammensetzung für den temporären Schutz von Kunststoffgegenständen, insbesondere von Kunststoffformteilen, gegen elektrostatische Aufladung und eine damit einhergehende Verschmutzung, die mindestens ein Antistatikum und mindestens ein Lösungsmittel enthält. Bei dem Antistatikum kann es sich insbesondere um ein elektrisch leitfähiges, organisches Polymer handeln.

Die Zusammensetzung liegt insbesondere in Form einer Lösung vor, wie sie im Zusammenhang mit dem erfindungsgemäßen Verfahren bereits ausführlich beschrieben ist. Bezüglich der Eigenschaften und Merkmale dieser Lösung, d.h. insbesondere Art und Mengen an Antistatikum (Polymer), Lösungsmittel (Wasser, organische Lösungsmittel, Mischungen), Additive usw. wird ausdrücklich auf den bisherigen Text der Beschreibung Bezug genommen und verwiesen.

Neben Lösungen können als erfindungsgemäße Zusammensetzung beispielsweise auch Dispersionen oder Emulsionen zur Herstellung der Antistatikbeschichtung eingesetzt werden.

Schließlich umfaßt die Erfindung noch die Verwendung einer Zusammensetzung, insbesondere einer Lösung, die mindestens ein Antistatikum, insbesondere ein elektrisch leitfähiges, organisches Polymer und mindestens ein Lösungsmittel enthält, zum temporären Schutz von Kunststoffgegenständen, insbesondere von Kunststoffformteilen, gegen elektrostatische Aufladung und eine damit einhergehende Verschmutzung.

Entsprechend der erfindungsgemäßen Verwendung wird vorzugsweise der Kunststoffgegenstand auf mindestens einem Teil seiner Oberfläche mit einer Beschichtung aus der Zusammensetzung versehen. Dies geschieht insbesondere unmittelbar oder kurz nach der Herstellung des Kunststoffgegenstandes. Die erhaltene Beschichtung wird, insbesondere vor einer sich anschließenden Weiterbearbeitung, wie einem Lackiervorgang, mit Wasser und/oder mindestens einem organischen Lösungsmittel abgewaschen. Zu den Merkmalen und Eigenschaften der verwendeten Zusammensetzung, insbesondere der verwendeten Lösung, wird auf die zugehörigen bisherigen Beschreibungsteile verwiesen und ausdrücklich Bezug genommen.

Die beschriebenen Merkmale und weitere Merkmale der Erfindung ergeben sich aus den nachfolgenden Beispielen in Verbindung mit den Ansprüchen. Hierbei können die einzelnen Merkmale jeweils für sich oder zu mehreren in Kombination miteinander verwirklicht sein.

### Beispiele

Zur Herstellung von zwei erfindungsgemäßen Zusammensetzungen wird als Antistatikum ein Polythiophen-haltiges Polymer eingesetzt. Es handelt sich dabei um das Produkt Baytron P der Bayer AG. Die chemische Bezeichnung dieses Produktes lautet Polyethylendioxythiophenpolystyrolsulfonat. Das Produkt Baytron P ist eine ca. 1,3 gew.-%ige wässrige Dispersion des elektrisch leitfähigen Polythiophen-haltigen Polymers.

Die beiden Lösungen werden in der Weise hergestellt, daß zunächst organisches Lösungsmittel und ggf. Wasser und Additive in einem sog. Dissolver vorgelegt werden und dann das Baytron P unter Rühren zugegeben wird. Die Herstellung der Lösungen erfolgt bei Raumtemperatur.

Die beiden Lösungen (A) und (B) haben die folgende Zusammensetzung:

| Lösung A | |
|---|---|
| | Gew.-% |
| N-Methylpyrrolidon | 4,6 |
| Isopropanol | 93,4 |
| Baytron P | 2 |
| (Wasser aus Baytron P) | (ca. 1,97) |

| Lösung B | |
|---|---|
| | Gew.-% |
| N-Methylpyrrolidon | 1,5 |
| Isopropanol | 30,5 |
| Wasser | 64 |
| Additiv (Benetzungshilfsmittel (Tensid Zonyl FS 300 von DuPont)) | 0,2 |
| Baytron P | 3,8 |
| (Wasser aus Baytron P) | (ca. 3,75) |

Zur Herstellung einer Antistatikbeschichtung gemäß dem erfindungsgemäßen Verfahren werden die Lösungen A und B jeweils auf die Oberfläche eines Kfz.-Stoßfängers aus Polycarbonat aufgebracht. Dieses Aufbringen kann in einfacher Weise durch Aufstreichen oder durch Tauchen erfolgen. Die erhaltenen Schichten werden bei 80 °C für 5 Minuten getrocknet. Es ergeben sich weitgehend farblose, schwer sichtbare Beschichtungen. Diese Beschichtungen besitzen jeweils einen ausreichend niedrigen Oberflächenwiderstand/Flächenelement im Megaohm-Bereich.

Nach mehrtägiger Lagerung in einer Umgebung mit hohen Staubanteilen können die Beschichtungen mit einer Reinigungslösung auf Wasserbasis (z.B. handelsübliche Tensidlösungen) auf einfache Weise abgewaschen werden. Nach der Trocknung ergeben sich saubere Oberflächen der Stoßfänger, die frei von Staubund Schmutzteilchen sind. Bei anschließender Lackierung ergeben sich gut haftende Lackschichten, deren Oberflächen die gewünschten optischen Eigenschaften besitzen.

## Patentansprüche

1. Verfahren zum temporären Schutz von Kunststoffgegenständen, insbesondere von Kunststoffformteilen, gegen elektrostatische Aufladung und eine damit einhergehende Verschmutzung, wobei der Kunststoffgegenstand mindestens teilweise mit einer Beschichtung, die mindestens ein Antistatikum enthält und mit Wasser und/oder mindestens einem organischen Lösungsmittel abwaschbar ist, versehen wird.

2. Verfahren nach Anspruch 1, dadurch gekennzeichnet, daß es sich bei den Kunststoffgegenständen um Bauteile von Kraftfahrzeugen handelt.

3. Verfahren nach Anspruch 1 oder Anspruch 2, dadurch gekennzeichnet, daß die Kunststoffgegenstände dafür vorgesehen sind, nach Abwaschen der Beschichtung lackiert zu werden, wobei vorzugsweise die Beschichtung unmittelbar vor dem Lackiervorgang abgewaschen wird, und dabei insbesondere das Abwaschen mit Hilfe von Reinigungsmitteln auf Wasserbasis erfolgt.

4. Verfahren nach einem der vorhergehenden Ansprüche, dadurch gekennzeichnet, daß es sich bei dem Antistatikum um ein elektrisch leitfähiges, organisches Polymer, insbesondere um ein Polythiophen- oder ein Polythiophen enthaltendes Polymer handelt.

5. Verfahren nach einem der vorhergehenden Ansprüche, dadurch gekennzeichnet, daß die Beschichtung in Form einer Lösung auf den Kunststoffgegenstand aufgebracht wird, die das Antistatikum, insbesondere das Polymer, und mindestens ein Lösungsmittel enthält, wobei es sich vorzugsweise bei dem Lösungsmittel um Wasser und/oder organische Lösungsmittel handelt, wobei die organischen Lösungsmittel insbesondere polare organische Lösungsmittel sind.

6. Verfahren nach Anspruch 5, dadurch gekennzeichnet, daß ein Gemisch aus Wasser und mindestens einem organischen Lösungsmittel eingesetzt wird, wobei das Gewichtsverhältnis von Wasser zu organischem Lösungsmittel 50:1 bis 1:50, vorzugsweise 20:1 bis 5:1, beträgt.

7. Verfahren nach Anspruch 5 oder Anspruch 6, dadurch gekennzeichnet, daß organisches Lösungsmittel in der Lösung in einer Menge von mindestens 2 Gew.-%, vorzugsweise mindestens 4 Gew.-%, bezogen auf das Gesamtgewicht der Lösung, enthalten ist.

8. Verfahren nach einem der Ansprüche 5 bis 7, dadurch gekennzeichnet, daß das Antistatikum in der Lösung in einer Menge von weniger als 5 Gew.%, vorzugsweise weniger als 1 Gew.%, bezogen auf das Gesamtgewicht der Lösung, enthalten ist, wobei vorzugsweise das Antistatikum in der Lösung in einer Menge zwischen 0,01 und 0,1 Gew.-%, bezogen auf das Gesamtgewicht der Lösung, enthalten ist.

9. Verfahren nach einem der Ansprüche 5 bis 8, dadurch gekennzeichnet, daß mindestens ein Additiv in der Lösung in einer Menge von weniger als 5 Gew.-%, vorzugsweise weniger als 1 Gew.-%, bezogen auf das Gesamtgewicht der Lösung, enthalten ist.

10. Zusammensetzung, insbesondere Lösung, für den temporären Schutz von Kunststofffgegenständen, insbesondere von Kunststoffformteilen, gegen elektrostatische Aufladung und eine damit einhergehende Verschmutzung, enthaltend mindestens ein Antistatikum, insbesondere ein elektrisch leitfähiges, organisches Polymer, und mindestens ein Lösungsmittel.

11. Zusammensetzung nach Anspruch 10, dadurch gekennzeichnet, daß es sich bei dem Antistatikum um ein Polythiophen- oder ein Polythiophen enthaltendes Polymer handelt.

12. Zusammensetzung nach Anspruch 10 oder Anspruch 11, dadurch gekennzeichnet, daß das Antistatikum in der Zusammensetzung in einer Menge von weniger 5 Gew.-%, vorzugsweise weniger als 1 Gew.-%, bezogen auf das Gesamtgewicht der Zusammensetzung, enthalten ist, wobei vorzugsweise das Antistatikum in der Zusammensetzung in einer Menge von weniger als 0,5 Gew.-%, vorzugsweise in einer Menge zwischen 0,01 und 0,1 Gew.-%, bezogen auf das Gesamtgewicht der Zusammensetzung, enthalten ist.

13. Zusammensetzung nach einem der Ansprüche 10 bis 12, dadurch gekennzeichnet, daß es sich bei dem Lösungsmittel um Wasser und/oder mindestens ein organisches Lösungsmittel handelt, wobei es sich bei dem organischen Lösungsmittel vorzugsweise um ein sog. polares Lösungsmittel, insbesondere einen aliphatischen Alkohol, handelt.

14. Zusammensetzung nach einem der Ansprüche 10 bis 13, dadurch gekennzeichnet, daß es sich bei dem Lösungsmittel um ein Gemisch aus Wasser und mindestens einem organischen Lösungsmittel, das mit Wasser mindestens teilweise mischbar ist, handelt, wobei vorzugsweise Wasser und organisches Lösungsmittel in einem Gewichtsverhältnis von 50:1 bis 1:50, vorzugsweise in einem Gewichtsverhältnis von 50:1 bis 1:1, vorzugsweise in einem Gewichtsverhältnis von 20:1 bis 5:1, vorgesehen sind.

15. Zusammensetzung nach Anspruch 13 oder Anspruch 14, dadurch gekennzeichnet, daß organisches Lösungsmittel in der Zusammensetzung in einer Menge von mindestens 2 Gew.-%, vorzugsweise mindestens 4 Gew.-%, bezogen auf das Gesamtgewicht der Zusammensetzung, enthalten ist.

16. Zusammensetzung nach einem der Ansprüche 10 bis 15, dadurch gekennzeichnet, daß mindestens ein Additiv in der Zusammensetzung in einer Gesamtmenge von weniger als 5 Gew.-%, vorzugsweise weniger als 1 Gew.-%, bezogen auf das Gesamtgewicht der Zusammensetzung, enthalten ist.

17. Zusammensetzung nach einem der Ansprüche 10 bis 16, enthaltend
- mindestens ein Antistatikum in einer Menge zwischen 0,01 und 1 Gew.-%, vorzugsweise zwischen 0,01 und 0,1 Gew.-%,
- Wasser in einer Menge zwischen 60 und 90 Gew.-%,
- mindestens ein Additiv in einer Menge zwischen 0 und 5 Gew.-%, vorzugsweise zwischen 1 und 3 Gew.-%, und
- mindestens einem organischen Lösungsmittel als Rest,
wobei die Gewichtsprozent-Angaben jeweils auf das Gesamtgewicht der Zusammensetzung bezogen sind.

18. verwendung einer Zusammensetzung, insbesondere einer Lösung, die mindestens ein Antistatikum, insbesondere ein elektrisch leitfähiges, organisches Polymer, und mindestens ein Lösungsmittel enthält, zum temporären Schutz von Kunststoffgegenständen, insbesondere von Kunststoffformteilen, gegen elektrostatische Aufladung und eine damit einhergehende Verschmutzung.

19. verwendung nach Anspruch 18, dadurch gekennzeichnet, daß der Kunststoffgegenstand auf mindestens einem Teil seiner Oberfläche mit einer Beschichtung aus der Zusammensetzung versehen wird, wobei vorzugsweise die Beschichtung, insbesondere vor einem anschließenden Lackiervorgang, mit Wasser und/oder mindestens einem organischen Lösungsmittel abgewaschen wird.
